# EUROPEAN PATENT APPLICATION

(11) **EP 2 495 183 A1**
(43) Date of publication of application: **05.09.2012**
(21) Application number: 12153693.2
(22) Date of filing: 02.02.2012
(51) Int. Cl.: B65D 5/48, E04C 2/42

(54) **A halving joint structure**

(30) Priority: 02.03.2011 GB 201103515
(71) Applicant: Rolls-Royce plc, London SW1E 6AT (GB)
(72) Inventor: Bishop, Jeffrey, Derby, Derbyshire DE65 6BU (GB)
(74) Representative: Tindall, Adam

(57) **Abstract**

A halving joint structure comprising: a first member (2) and a second member (4) couplable to one another in a nonparallel arrangement by a halving joint, wherein each of the first and second members (2, 4) has a slot (6a, 6b) for receiving a portion (27, 29) of the other of the first and second members (2, 4) to form the halving joint; wherein the first and/or second member (2, 4) has a locking mechanism (14), the locking mechanism (14) being movable between an open configuration, which allows the portion (27, 29) of the other of the first and second members (2, 4) to be removed from the slot (6a, 6b), and a locked configuration, which prevents the portion (27, 29) from being removed from the slot (6a, 6b).

## Description

The present invention relates to a halving joint structure, and particularly, but not exclusively, to a halving joint structure which improves the strength and rigidity of the joint.

### Background

A conventional halving joint is created by forming a slot in opposite edges of a first member and a second member, which are to be joined. Commonly, the slots formed in the first and second member are of equal length and the slots extend half of the way through the thickness of each member. However, if the members are of differing thicknesses, only one of the slots may extend half of the way through the thickness of the member.

The two members are arranged perpendicularly and the slot of one member is introduced into the slot of the other member until a bottom surface of the slot of the first member contacts a bottom surface of the slot of the second member. This forms an overlapping interconnection between the two members. Where the slots of the first and second member are of equal length and extend half of the way through the thickness of each member, the edges of the first and second members align to form a continuous connection.

The conventional halving joint is simple to manufacture and assemble, and is therefore widely used. The conventional halving joint is usually created with wooden members, but can also be formed from cardboard, plastic or metal members (particularly sheet metal). A plurality of members each having a plurality of slots can be used to form a grid-type arrangement. This is particularly useful for forming compartments, for example, for packaging.

However, the conventional halving joint is relatively weak and the first and second members may become misaligned easily. Furthermore, the joint can be easily separated, which in certain applications is undesirable. Where the members are formed from metal, this can be prevented by welding the first and second members together. However, welding causes distortion of the members, and also increases the cost and lead-time of the component. Furthermore, it is then not possible to separate the joint if desired.

The present invention seeks to provide a halving joint structure which solves some or all of the problems associated with the conventional halving joint described above.

### Statements of Invention

In accordance with an aspect of the invention, there is provided a halving joint structure comprising: a first member and a second member couplable to one another in a nonparallel arrangement by a halving joint, wherein each of the first and second members has a slot for receiving a portion of the other of the first and second members to form the halving joint; wherein the first and/or second member has a locking mechanism, the locking mechanism being movable between an open configuration, which allows the portion of the other of the first and second members to be removed from the slot, and a locked configuration, which prevents the portion from being removed from the slot.

The halving joint structure in accordance with the present invention does not require additional fasteners and therefore the cost and lead-time of the structure may be reduced. Furthermore, it is not necessary to weld the joint and therefore distortion caused by welding may be avoided. In addition, the locking mechanism may be moved from the open configuration to the locked configuration and vice versa, thus allowing the halving joint structure to be assembled and disassembled when desired.

The portion of the other of the first and second members may have a recess for receiving the locking mechanism.

The locking mechanism may comprise a locking dog which may be bendable from the open configuration, where it does not obstruct the slot, to the locked configuration, where it does obstruct the slot, and vice versa.

An inner surface of the locking dog may form part of the slot.

The inner surface of the locking dog may have an indentation. The indentation may comprise a locking surface which locks against a locking surface of the other of the first and second members when the locking mechanism is in the locked configuration.

The locking surface of the locking dog may be configured such that it is parallel to the locking surface of the other of the first and second members when the locking mechanism is in the locked configuration.

This configuration may prevent the locking dog from being inadvertently moved from the locked configuration to the open configuration as a result of a disengaging force.

The locking mechanism may further comprise a second locking dog.

A recess may separate the locking dog from a remainder of the member to allow the locking dog to bend.

The recess which separates the locking dog from the remainder of the member may be adapted to receive a tapered implement, such as a screwdriver, to bend the locking dog.

The locking mechanism may be integrally formed with the member.

The first and second members may be metal.

The first and second members may be formed from sheet metal.

In accordance with an aspect of the invention, there is provided a method of assembling a halving joint structure, the method comprising: providing a first member and a second member, each having a slot for receiving a portion of the other of the first and second members, and the first and/or second member having a locking mechanism; inserting the portion of the first or second member into the slot of the other of the first and second members to form a halving joint, with the first and second members in a nonparallel arrangement; moving the locking mechanism from an open configuration, which allows the portion of the other of the first and second members to be removed from the slot, to a locked configuration, which prevents the portion from being removed from the slot.

The locking mechanism may comprise a locking dog, and moving the locking mechanism may comprise bending the locking dog from the open configuration, where it does not obstruct the slot, to the locked configuration, where it does obstruct the slot.

A recess may separate the locking dog from a remainder of the member to allow the locking dog to bend; and the method may further comprise forcing a tapered implement, such as a screwdriver, into the recess to bend the locking dog from the open configuration to the locked configuration.

### Brief Description of the Drawings

For a better understanding of the present invention, and to show more clearly how it may be carried into effect, reference will now be made, by way of example, to the accompanying drawings, in which:
Figure 1 is a side view of a first member and a second member for forming a halving joint structure according to an embodiment of the invention;
Figure 2 is a perspective view of the first and second members showing the assembly of the halving joint structure;
Figure 3 is a perspective view of the assembled halving joint structure; and
Figure 4 is an enlarged side cross-sectional view of the halving joint structure in a locked configuration.

### Detailed Description

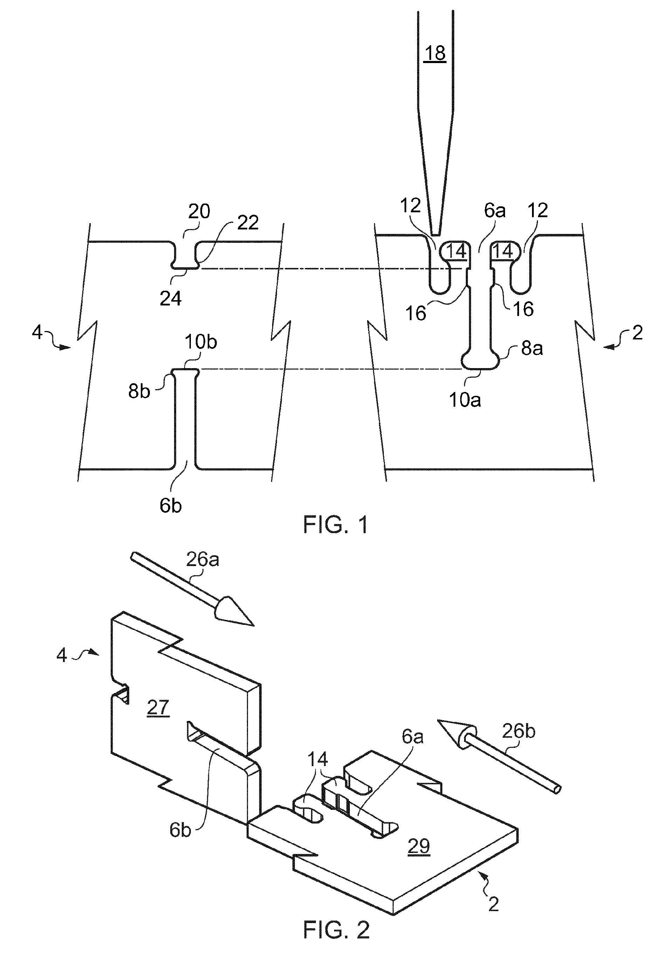

With reference to Figure 1, a halving joint structure according to an embodiment of the invention is formed by a first member 2 and a second member 4. The first and second members 2, 4 are constructed from sheet metal.

A slot 6a is formed in the first member 2 and a slot 6b is formed in the second member 4. The slots 6a, 6b extend perpendicularly from opposite edges of the first and second members 2, 4. The slots 6a, 6b of the first and second members 2, 4 widen at a bottom end to form a bulbous portion 8a, 8b having a flat bottom surface 10a, 10b.

The first member 2 has a pair of recesses 12 which extend into the first member from the same edge as the slot 6a. The pair of recesses 12 are separated from one another by the slot 6a and are adjacent to the slot 6a. The recesses 12 define a pair of locking dogs 14 between the slot 6a and each recess 12. The locking dogs 14 are integrally formed with the first member 2 and inner surfaces of the locking dogs 14 define a portion of the slot 6a. The pair of recesses 12 detach the locking dogs 14 from the remainder of the first member 2. The pair of recesses 12 are sized to receive a tapered implement, such as a screwdriver 18.

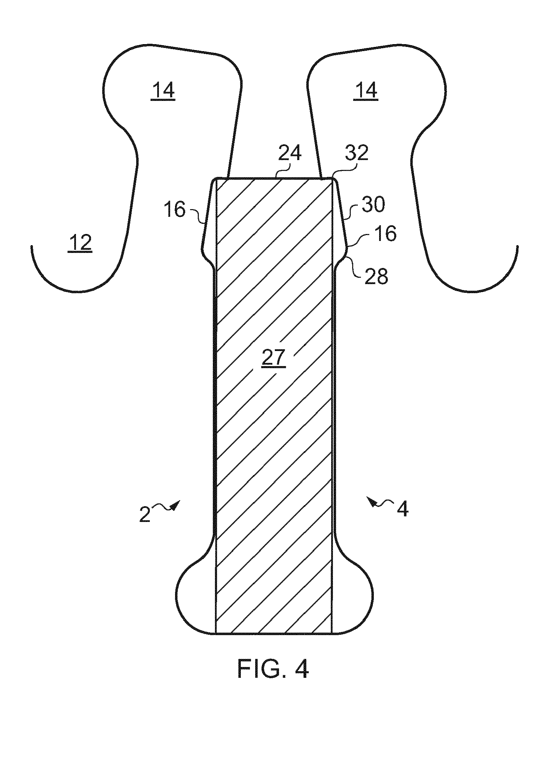

The inner surface of each locking dog 14 has an indentation 16 formed in it. The configuration of the indentation 16 will be described further below with reference to Figure 4.

The second member 4 has a recess 20 formed in an opposite edge to the slot 6b. The recess 20 is essentially a shorter version of the slot 6b and widens at a bottom end to form a bulbous portion 22 having a flat bottom surface 24.

With reference to Figure 2, the first member 2 and second member 4 are introduced to one another with the first member 2 arranged perpendicularly to the second member 4 (i.e. rotated 90 degrees about an axis running along the slot 6a). The first member 2 and second member 4 are introduced to one another with the locking dogs 14 in an open configuration i.e. the locking dogs 14 are spaced apart from one another to allow the first and second members 2, 4 to be introduced to one another. As indicated by the arrows 26a, 26b, the first and second members 2, 4 are urged towards one another with the slots 6a, 6b in alignment until the bottom surface 10a of the slot 6a of the first member 2 contacts the bottom surface 10b of the slot 6b of the second member 4.

When the bottom surfaces 10a, 10b contact one another, a portion 27 of the second member 4 between the bottom surface 10b of the slot 6b and the bottom surface 24 of the recess 20 is contained within the slot 6a of the first member 2. Similarly, a portion 29 of the first member 2 between the bottom surface 10a of the slot 6a and an edge of the first member 2 is contained within the slot 6b of the second member 4.

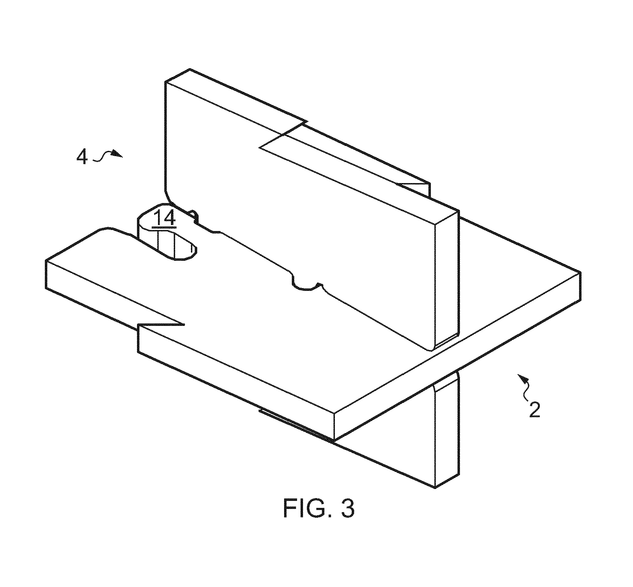

As shown in Figure 3, when the bottom surfaces 10a, 10b contact one another, the edges of the first and second members 2, 4 are in alignment. A screwdriver 18 or other tapered implement is urged into each of the recesses 12 to force the locking dogs 14 towards one another. The screwdriver 18 causes the locking dogs 14 to bend inwards, as shown in Figure 4, and to move from the open configuration to a locked configuration which prevents the portions 27, 29 of the first and second members 2, 4 from being withdrawn from the slots 6a, 6b.

The indentation 16 formed in the inner surface of each locking dog 14 comprises an angled lower portion 28, a parallel central portion 30 and an angled upper portion 32. The angled lower portion 28 and angled upper portion 32 are angled with respect to the remainder of the slot 6a and the parallel central portion 30 is parallel to the remainder of the slot 6a but set back from it. The angled lower portion 28 and angled upper portion 32 connect the parallel central portion 30 to the remainder of the slot 6a.

The angled upper portion 32 of each indentation 16 forms a locking surface. Similarly, the bottom surface 24 of the recess 20 forms a locking surface. As shown in Figure 1, the distance D₁ between the bottom surface 10b of the slot 6b and the bottom surface 24 of the recess 20 is approximately equal to the distance between the bottom surface 10a of the slot 6a and the angled upper portion 32 of the indentation 16. Consequently, when the locking dogs 14 are bent into the locked configuration, the angled upper portion 32 contacts the bottom surface 24 of the recess 20. These locking surfaces abut one another and prevent the portions 27, 29 of the first and second members 2, 4 from being withdrawn from the slots 6a, 6b. The locking dogs 14 therefore form a locking mechanism which stops the halving joint from being disassembled.

The angled upper portion 32 is configured so that when the locking dogs 14 are bent into the locked configuration, the angled upper portion 32 lies parallel to the bottom surface 24 of the recess 20. Consequently, any forces acting to disengage the first and second members 2, 4 are perpendicular to the locking surfaces formed by the angled upper portion 32 of the indentation 16 and the bottom surface 24 of the recess 20. Therefore, such forces do not result in the locking dogs 14 being splayed (i.e. bent back) from the locked configuration to the open configuration.

The locking dogs 14 also improve the rigidity of the structure as they prevent the orientation of the first and second members 2, 4 from changing.

The locking dogs 14 can be bent from the locked configuration back to the open configuration by laterally forcing the locking dogs 14 back to their original position. This allows the first and second members 2, 4 to be separated from one another when desired. The locking dogs 14 may move from the open configuration to the locked configuration and back to the open configuration many times.

Although only the first member 2 has been described as having a pair of locking dogs 14, the second member 4 may also be provided with a pair of locking dogs 14. With this arrangement, the first member 2 is also provided with a recess 20 formed in an opposite edge to the slot 6a for receiving the locking dogs 14 of the second member 4. Consequently, with this arrangement the first and second members 2, 4 are identical. Furthermore, each of the first and second members 2, 4 may comprise a plurality of slots 6a, 6b, locking dogs 14 and recesses 20 so as to allow the first and second members 2, 4 to form multiple halving joints with other members. This allows a grid-type arrangement to be formed.

The first and second members 2, 4 do not necessarily need to be arranged perpendicularly to one another. The first and second members 2, 4 may be joined in any nonparallel arrangement. Furthermore, the locking dogs 14 may be moved from the open configuration to the locked configuration using a non-tapering implement which may, for example, be levered (i.e. pivoted) or translated to force the locking dogs 14 toward one another.

Although the first and second members 2, 4 have been described as being constructed from sheet metal, they could be formed from alternative materials. Furthermore, where the base material of the first and second members 2, 4 is unsuitable for forming the locking dogs 14, a metal (or other suitable material) locking dog may be joined to the first and/or second members 2, 4.

The halving joint structure of the present invention may find particular applications in the aerospace industry. For example, the halving joint structure may be used to form ducts or other sheet metal structures.

## Claims

1. A halving joint structure comprising:
a first member and a second member couplable to one another in a nonparallel arrangement by a halving joint, wherein each of the first and second members has a slot for receiving a portion of the other of the first and second members to form the halving joint;
wherein the first and/or second member has a locking mechanism, the locking mechanism being movable between an open configuration, which allows the portion of the other of the first and second members to be removed from the slot, and a locked configuration, which prevents the portion from being removed from the slot.

2. A halving joint structure as claimed in claim 1, wherein the portion of the other of the first and second members has a recess for receiving the locking mechanism.

3. A halving joint structure as claimed in claim 1, wherein the locking mechanism comprises a locking dog which is bendable from the open configuration, where it does not obstruct the slot, to the locked configuration, where it does obstruct the slot, and vice versa.

4. A halving joint structure as claimed in claim 3, wherein an inner surface of the locking dog forms part of the slot.

5. A halving joint structure as claimed in claim 4, wherein the inner surface of the locking dog has an indentation, wherein the indentation comprises a locking surface which locks against a locking surface of the other of the first and second members when the locking mechanism is in the locked configuration.

6. A halving joint structure as claimed in claim 5, wherein the locking surface of the locking dog is configured such that it is parallel to the locking surface of the other of the first and second members when the locking mechanism is in the locked configuration.

7. A halving joint structure as claimed in any one of claims 3 to 6, wherein the locking mechanism further comprises a second locking dog.

8. A halving joint structure as claimed in any one of claims 3 to 7, wherein a recess separates the locking dog from a remainder of the member to allow the locking dog to bend.

9. A halving joint structure as claimed in any one of claims 8, wherein the recess which separates the locking dog from the remainder of the member is adapted to receive a tapered implement to bend the locking dog.

10. A halving joint structure as claimed in any one of the preceding claims, wherein the locking mechanism is integrally formed with the member.

11. A halving joint structure as claimed in any one of the preceding claims, wherein the first and second members are metal.

12. A halving joint structure as claimed in claim 11, wherein the first and second members are formed from sheet metal.

13. A method of assembling a halving joint structure, the method comprising:
providing a first member and a second member, each having a slot for receiving a portion of the other of the first and second members, and the first and/or second member having a locking mechanism;
inserting the portion of the first or second member into the slot of the other of the first and second members to form a halving joint, with the first and second members in a nonparallel arrangement;
moving the locking mechanism from an open configuration, which allows the portion of the other of the first and second members to be removed from the slot, to a locked configuration, which prevents the portion from being removed from the slot.

14. A method as claimed in claim 13, wherein the locking mechanism comprises a locking dog, and wherein moving the locking mechanism comprises bending the locking dog from the open configuration, where it does not obstruct the slot, to the locked configuration, where it does obstruct the slot.

15. A method as claimed in claim 14, wherein a recess separates the locking dog from a remainder of the member to allow the locking dog to bend; the method further comprising forcing a tapered implement into the recess to bend the locking dog from the open configuration to the locked configuration.
